# EUROPÄISCHE PATENTSCHRIFT

(11) **EP 1 803 064 B1**
(45) Veröffentlichungstag und Bekanntmachung des Hinweises auf die Patenterteilung: **01.10.2008**
(21) Anmeldenummer: 05797794.4
(22) Anmeldetag: 15.10.2005
(51) Int. Cl.: G06F 9/46, B60R 16/00

(54) **PLANUNG VON PROZESSABLÄUFEN IN FAHRSYSTEMEINRICHTUNGEN**
PROCESS PLANNING IN DRIVING SYSTEM DEVICES
PLANIFICATION DU DEROULEMENT DE PROCESSUS DANS DES DISPOSITIFS DE SYSTEME DE CONDUITE

(30) Priorität: 23.10.2004 DE 102004051758
(43) Veröffentlichungstag der Anmeldung: 04.07.2007
(73) Patentinhaber: Daimler AG, 70327 Stuttgart (DE)
(72) Erfinder: GEHRING, Ottmar, 71394 Kernen (DE); HOLZMANN, Frédéric, 93073 Neutraubling (DE); PAASCHE, Sascha, 150-0003 Tokyo (JP); SCHWARZHAUPT, Andreas, 76829 Landau (DE); SPIEGELBERG, Gernot, 93077 Bad Abbach (DE); SULZMANN, Armin, 69115 Heidelberg (DE)
(86) Internationale Anmeldenummer: PCT/EP2005/011118
(87) Internationale Veröffentlichungsnummer: WO 2006/045464

(56) Entgegenhaltungen:
- EP-A- 1 447 281
- WO-A-03/100614
- DE-A1- 10 226 683
- US-A- 5 938 708
- US-A1- 2002 133 531
- US-B1- 6 430 594
- JORDAN J E: "EXPERIENCES STRUCTURING SOFTWARE IN A PERIODIC REAL-TIME ENVIRONMENT" SOFTWARE PRACTICE & EXPERIENCE, WILEY & SONS, BOGNOR REGIS, GB, Bd. 20, Nr. 7, 1. Juli 1990 (1990-07-01), Seiten 707-718, XP000138182 ISSN: 0038-0644

## Beschreibung

Die Erfindung betrifft ein Verfahren zur Planung von Prozessabläufen in Fahrsystemeinrichtungen.

Derzeitige On-Board-Systeme sind für eine Reihe Funktionalitäten ausgelegt. Einige dieser Funktionalitäten (z.B. ObjektErkennung) erfordern erhebliche Bearbeitungskapazität. Situationsbedingt kann es daher vorkommen, dass aktuell mehr Funktionalitäten ausgeführt werden müssen, als dafür Kapazitäten frei sind. Die gesamte Systemleistung reicht dann nicht für eine Echtzeitbearbeitung aller anstehenden Aufgaben aus und die Latenzzeit für die einzelnen Bearbeitungsabläufe verlängert sich entsprechend. Dadurch kann es vorkommen, dass einzelne, dringende Aufgaben nicht rechtzeitig ausgeführt werden.

Aus der gattungsbildenden WO 03/100614 A ist ein Verfahren zur Beeinflussung von Prozessabläufen in Fahrzeugsystemeinrichtungen bekannt, bei dem die von dem System zu bearbeitenden Aufgaben nach verschiedenen Kriterien klassifiziert und den Aufgaben entsprechende Prioritätsstufen zugeordnet werden und bei dem über die so bestimmte Rangfolge der zu bearbeitenden Aufgaben ein Ablaufplan erstellt wird und aktualisiert wird.

Aus der US 2002/133531 A1 ist ein Prozessor zur Durchführung eines Fehlererfassungsprogramms für ein Fahrzeug bekannt, wobei zwei Fehlererfassungsprozesse, denen unterschiedliche Prioritätsstufen zugeordnet sind, eine Speicherbearbeitung anfordern können. Ein Speicherverarbeitungsprozess führt die angeforderte Speicherbearbeitung in der angeforderten Reihenfolge durch, so dass ungeachtet von der Prioritätsstufe der Fehlererfassungsprozesse eine durch einen der Fehlererfassungsprozesse angeforderte Speicherbearbeitung nicht unterbrochen wird, wenn der andere Fehlerbearbeitungsprozess ebenfalls eine Speicherbearbeitung anfordert. Die Fehlerbearbeitungsprozesse können aber jeweils von sich aus den Speicherbearbeitungsprozess unterbrechen.

Der Erfindung liegt die Aufgabe zugrunde, ein Planungsverfahren zur Steuerung von Prozessabläufen in Fahrsystemeinrichtungen zu entwickeln, das eine vorrangige Bearbeitung wichtiger Funktionalitäten gewährleistet.

Diese Aufgabe wird gelöst durch das Verfahren gemäß Anspruch 1. Weitere vorteilhafte Ausgestaltungen des erfindungsgemäßen Verfahrens sind Gegenstand der Unteransprüche.

Die Erfindung wird im Folgenden anhand bevorzugter Ausführungsbeispiele unter Bezugnahme auf die Figuren und den darin verwendeten Bezeichnungen beschrieben.

Dabei zeigt:
- Fig. 1: ein Diagramm zur Prioritätsplanung unter Berücksichtigung der jeweiligen Verfallzeit (deadline)
- Fig. 2: die tabellarische Sortierung der Abfolge von Bearbeitungsaufgaben in Abhängigkeit von Prioritätswerten und Verfallzeiten einzelner Funktionen.
- Fig. 3: Beispiel zur Verteilung der Systemkapazität auf verschiedene Aufgaben mit unterschiedlichem Prioritätslevel für den Funktionalitätsbereich "Sondierung Fahrzeugumgebung"

Für moderne On-Board-Systeme in einem Fahrzeug ist es wichtig, gezielt Prioritätslisten für die auszuführenden Aufgaben einzurichten. Einige der anstehenden Aufgaben werden dadurch erst dann abgearbeitet, wenn genug Kapazität frei ist und kein wichtigerer Ablauf ausgeführt werden muss. Ein entsprechend konzipiertes Aufgabenverwaltungssystem ermöglicht jederzeit eine Ausführung der wichtigen Funktionen in Echtzeit, unabhängig von der Prozessorbelastung, und eine Bearbeitung der weniger dringlichen Funktionen zu einem späteren Zeitpunkt. Dazu muss die Ablaufplanung variabel ausgelegt sein und kann an die Abläufe zur Darstellung, Steuerung und Bearbeitung verschiedener Daten etc. angepasst werden.

Für die erfindungsgemäße Ablaufplanung werden alle anfallenden Aufgaben nach unterschiedlichen Kriterien klassifiziert.

Im einfachsten Fall sind nur zwei Kriterien vorgesehen:
a) die Wichtigkeit der Aufgabe
b) die Verfallzeit der Aufgabe

Um die Wichtigkeit einer Aufgabe wiederzugeben, können beispielsweise verschiedene Wichtigkeitslevels (1,2,3...) definiert und den jeweiligen Aufgaben zugewiesen werden. Je nach Konfiguration genügen u.U. minimal zwei unterschiedliche Abstufungen: wichtige Aufgaben (Vorrangsstufe) und weniger wichtige. Häufig ist jedoch eine weitergehende Abstufung durch eine größere Anzahl zugewiesener Wichtigkeitslevel vorteilhaft.

Die Verfallzeit einer Aufgabe bewirkt zeitabhängig eine dynamische Änderung ihres Rangs in der Abfolge der zu bearbeitenden Funktionen. Nur so kann gewährleistet werden, dass alle Aufgaben innerhalb ihrer Bearbeitungsfrist ausgeführt werden. Entsprechend muss bei der Planung dynamisch zwischen einer Aufgabe mit hohem Wichtigkeitslevel und späterer Verfallszeit und einer Aufgabe mit niedrigem Wichtigkeitslevel aber früherer Verfallzeit unterschieden werden.

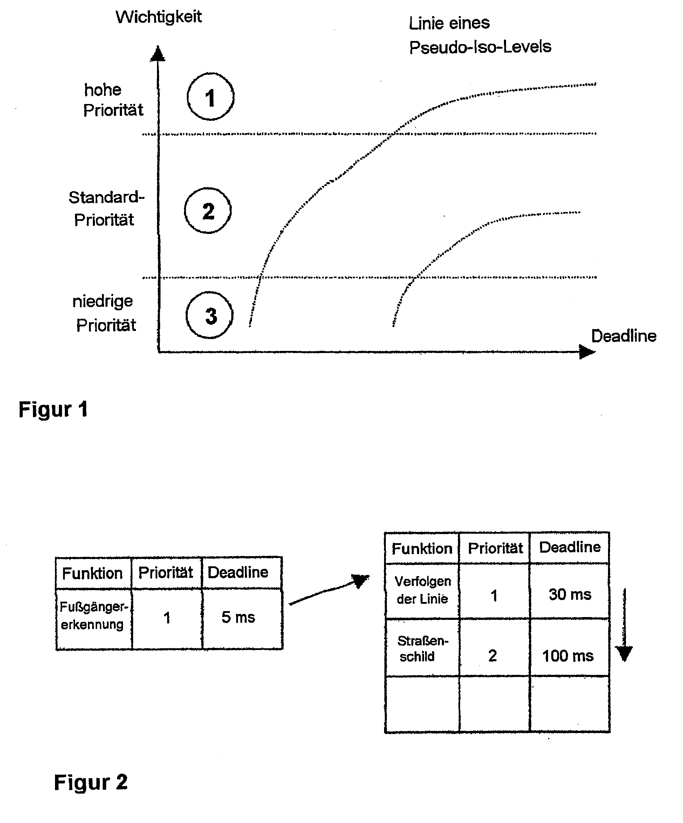

Bereits mit dieser einfachen Klassifizierung über Wichtigkeitslevel und Verfallzeiten lassen sich verschiedene Aufgaben in einem Prioritätsplan zusammenstellen. Figur 1 zeigt eine entsprechende grafische Darstellung. Als Abszisse des Diagramms ist die Verfallzeit (deadline) aufgetragen, auf der Ordinate sind in diesem Beispiel 3 Wichtigkeitsstufen (1,2,3) für hohe, Standard-, und niedrige Priorität eingetragen. Die zwei eingetragenen Kurven (als Pseudo-Iso-Level bezeichnet) repräsentieren für zwei Aufgaben mit gleichem Wichtigkeitslevel (3) aber unterschiedlicher Verfallzeit die sich mit fortschreitender Zeit dynamisch ändernde Rangbewertung. Damit ist es möglich, die jeweiligen Bearbeitungsfristen für die Ausführung der Aufgaben zu berücksichtigen.

Die Ablaufplanung generiert auf diese Weise eine dynamische Liste der anstehenden Aufgaben. Jeder Aufgabe ist ein Wichtigkeitslevel und ein Verfalldatum zugeordnet- Wenn eine neue Aufgabe eingeht, muss das System die entsprechende Ausführungsposition für sie auswählen und die Liste aktualisieren.

Figur 2 zeigt ein entsprechendes Beispiel der Ablaufplanung für die Bearbeitung von Funktionalitäten im Bereich Visualisierungsalgorithmen. Zwei Aufgaben befinden sich in der aktuellen Liste des Ablaufplaners (rechte Tabelle der Fig. 2). Die erste Aufgabe ist das Verfolgen einer Linie auf der Straße, die zweite Aufgabe das Lesen der Geschwindigkeitsbegrenzung auf einem Schild. Diese beiden Aufgaben sind entsprechend ihres Wichtigkeitslevels (1 bzw. 2) und der jeweiligen Verfall zeit (30ms bzw. 100ms) in die aktuelle Rangliste eingetragen. Eine neue Aufgabe soll in diesem Beispiel nachträglich hinzukommen, und zwar die Anforderung, die Anwesenheit eines Fußgängers zu überprüfen (linker Teil in Fig.2). Diese Aufgabe ist von entscheidender Wichtigkeit zur Vermeidung einer Gefährdung eines potenziellen Fußgängers- Sie muss daher schnellstmöglich und mit höchster Priorität behandelt werden. In der Ablaufplanung wird entsprechend diese Aufgabe an die erste Position gesetzt und die beiden anderen Aufgaben zurückgestellt. Jede anstehende Aufgabe ist danach in der aktualisierten Planungsliste mit neu zugewiesener Rangfolge enthalten.

Zusätzlich zu den Kriterien Wichtigkeilslevel und Verfallzeit können weitere Kriterien bei der Ablaufplanung berücksichtigt werden. So kann beispielsweise in einer erweiterten Ausführungsform der Erfindung die für die Abwicklung einer Aufgabe erforderliche Ausführungszeit, sofern diese bekannt ist, zur Prioritätseinstufung mit einbezogen werden.

Je nach den zur Verfügung stehenden Mitteln (Verarbeitungsressourcen) ergibt sich in Verbindung mit der Verfallzeit einer Aufgabe ein Zeitlimit, bis wann spätestens die Aufgabe bearbeitet werden muss. Wenn eine anstehende Aufgabe sehr schnell erledigt werden muss und die aktuell bearbeitete Aufgabe nicht vor dem Stichzeitpunkt der neuen Aufgabe abge-schlossen sein wird, so muss das System die laufende Aufgabe stoppen und dann weiterführen, wenn wieder Kapazitäten frei werden.

Für den Abbruch einer Aufgabe ohne Verlust der bereits erhaltenen (teilweisen) Verarbeitungsergebnisse gibt es verschiedene Möglichkeiten. Beispielsweise kann eine vollständige Speicherung aller mit der Aufgabe korrelierten Daten, inklusive aller Daten des Systemstatus (Prozessorregister etc.) erfolgen. Es wird also lediglich der Bearbeitungsprozess einer Aufgabe in seiner momentanen Stufe unterbrochen, um zu einem späteren Zeitpunkt diesen Bearbeitungszustand erneut einzulesen und die Aufgabe zu beenden.

Eine andere Möglichkeit besteht darin, eine Aufgabe mit vorläufigen Ergebnissen zu beenden, d.h. ohne Endergebnisse zu erhalten. Dies kann beispielsweise durch eine "any time answer"-Bearbeitung ermöglicht werden, welche die zum Abbruchzeitpunkt bestmöglich aufbereiteten Ergebnisse liefert. Die Werte sind bei Abbruch also nicht optimal. Um derartige Unterbrechungen zu erlauben, muss die Bearbeitung der Auf gaben durch Konvergenzverfahren erfolgen, d.h. die Resultate werden mit fortschreitender Bearbeitungszeit verbessert. Sofern also die Aufgabe es erlaubt, wird sie gestoppt, sobald die Ergebnisse ein angemessenes Qualitätsniveau erreicht haben. Sind die Ergebnisse noch unzureichend, so wird die Aufgabe nach Speicherung der Zwischenwerte zur späteren Vervollständigung in den Stapel der anstehenden Aufgaben zurückgestellt.

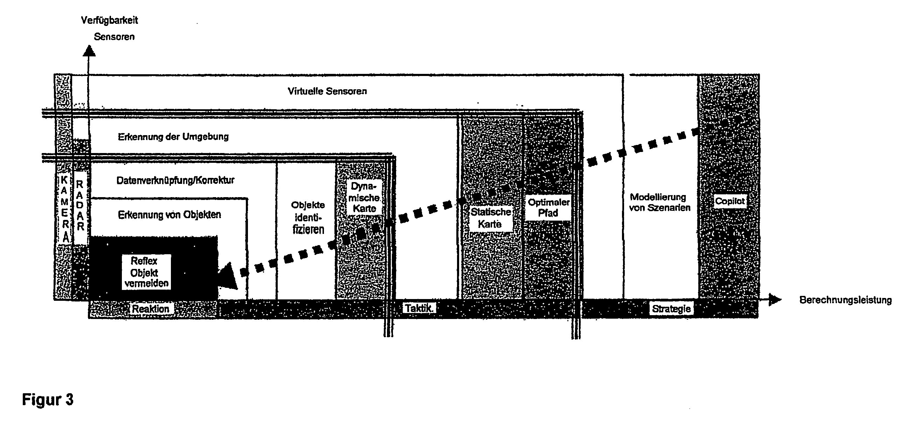

In einer weiteren Ausführungsform der Erfindung kann die für eine Aufgabe eingesetzte Bearbeitungskapazität nach Bedarf modifiziert werden. So lassen sich beispielsweise im Funktionalitätsbereich "Sondierung Fahrzeugumgebung Aufgaben mit verschiedenem Kapazitätsbedarf definieren. Eine solche Strukturierung ist schematisch dargestellt in Figur 3, wobei vier Zonen unterschiedlichen Kapazitätsbedarfs aufgrund der zur Ausführung jeweils erforderlichen Berechnungsleistung unterschieden sind:
- Aufgaben mit "Reflex"-Charakter, z.B. Notbremsung bei Erfassung von in nächster Nähe befindlichen Objekten (Erkennung eines Fußgängers, der die Straße überquert). Diese Aufgabe hat die höchste Priorität und muss sehr regelmäßig ablaufen (einige Millisekunden).
- Aufgaben für ein Entfernungsmanagement, z.B. Wegplanung/Zielführung gemäß einer Karte der einzelnen Fahrzeuge.
- Aufgaben für ein Fahrspurmanagement, z.B. Korrektur von Verzerrungsphänomenen in Kurven bei der Entfernungsberechnung.
- Aufgaben zur Bewertung der Vorgänge im Straßenverkehr. Dies entspricht einem sehr intelligenten Auto, das in der Lage ist, die Aktionen der anderen Fahrzeuge in die eigene Fahrplanung einzubeziehen.

Je mehr Komfort ein On-Board-System bieten soll, umso höher ist das erforderliche Abstraktionsniveau und umso mehr Kapazität wird benötigt. Im dargestellten Beispiel kann es vorkommen, dass aufgrund der Beschränkungen in der Rechenkapazität bei einer großen Menge von zu überwachenden Objekten nicht mehr genug Rechenkapazität für das Straßenmanagement vorhanden ist. In diesem Fall wird erfindungsgemäß für einige der Aufgaben eine Einschränkung der hierfür eingesetzten Systemkapazitäten vorgenommen.

Hierfür wird ein System zur Verknüpfung der unterschiedlichen Aufgaben eingerichtet. Die Basisaufgaben für Sicherheitsaspekte, insbesondere im Reflex-Bereich, müssen in der Planungsliste vorhanden sein, wenn möglich mit ihren Ausführungszeiten. Sie haben die höchste Priorität. Dann müssen für jede Stufe die neuen Aufgaben angegeben werden, sowie die Verknüpfungen mit den niedrigeren Stufen. Bei der Ablaufplanung wird zunächst versucht, allen Aufgaben den jeweils erforderlichen Kapazitätslevel zuzuweisen. Kommt es in Abhängigkeit von Sensorendaten und Rechenleistung zu Kapazitätsproblemen, so werden - nach Priorität abgestuft - einzelnen Aufgaben niedrigere Kapazitäten zur Verfügung gestellt.

Alternativ oder in Ergänzung zu einer Kapazitätsbeschränkung einzelner Aufgaben können auch aktiv Ressourcen dadurch geschaffen werden, dass auf andere Sensoren gewechselt wird, bzw. verschiedene Sensoren im Kooperationsmodus betrieben werden und damit dann andere, das System stark beanspruchende Sensoren zwecks Erhöhung der Kapazitäten wegfallen können. Wenn zum Beispiel ein Zielverfolgungssystem verschiedene Fahrzeuge vor sich überwachen muss, kann das System die Auswertung einer Kamera (CCD-Sensor), die zwar präzise ist, aber hohe Kapazitäten fordert, darauf beschränken, die zwei nächsten Fahrzeuge überprüfen und für die anderen die weniger präzise aber dafür mit geringerem Kapazitätsbedarf ablaufende Radarauswertung heranziehen.

## Patentansprüche

1. Verfahren zur dynamischen Beeinflussung von Prozessabläufen in Fahrzeugsystemeinrichtungen, wobei die vom System zu bearbeitenden Aufgaben nach verschiedenen Kriterien klassifiziert und den Aufgaben entsprechende Prioritätslevel zugewiesen werden und über die so ermittelte Rangfolge der zu bearbeitenden Aufgaben ein Ablaufplan erstellt bzw. aktualisiert wird,
wobei zur vorrangigen Ausführung von Aufgaben mit höherem Prioritätslevel, beispielsweise als neue Aufgabe die Erfassung eines gefährdeten Fußgängers, aktuell bearbeitete Aufgaben mit niedrigerem Prioritätslevel unterbrochen werden,
**dadurch gekennzeichnet,**
**dass** Zwischenergebnisse unterbrochener Aufgaben bei Erreichen vorgegebener Qualitätsmerkmale als Endergebnis akzeptiert werden und diese unterbrochenen Aufgaben nicht in einen aktualisierten Ablaufplan aufgenommen werden.

2. Verfahren nach Anspruch 1,
**dadurch gekennzeichnet,**
**dass** als Kriterium die Wichtigkeit einer zu bearbeitenden Aufgabe, insbesondere in Hinblick auf Sicherheitsanforderungen, eingestuft und vorrangig zur Klassifizierung herangezogen wird.

3. Verfahren nach Anspruch 1 oder 2,
**dadurch gekennzeichnet,**
**dass** als Kriterium die Verfallzeit einer zu bearbeitenden Aufgabe zur Klassifizierung herangezogen wird.

4. Verfahren nach Anspruch 1, 2 oder 3,
**dadurch gekennzeichnet,**
**dass** als Kriterium die zu erwartende Bearbeitungszeit einer zu bearbeitenden Aufgabe zur Klassifizierung herangezogen wird.

5. Verfahren nach einem der vorangehenden Ansprüche,
**dadurchgekennzeichnet ,**
**dass** der Ressourcenbedarf wie Sensordatenerfassung, Speichernutzung, Prozessorauslastung einer zu bearbeitenden Aufgabe in Hinblick auf vorhandene Systemkapazität zur Klassifizierung herangezogen wird.

6. Verfahren nach einem der vorangehenden Ansprüche,
**dadurch gekennzeichnet,**
**dass** eine dynamische Aktualisierung des Ablaufplans zyklisch erfolgt.

7. Verfahren nach einem der vorangehenden Ansprüche 1 bis 5,
**dadurch gekennzeichnet,**
**dass** eine dynamische Aktualisierung des Ablaufplans mit Eingehen einer neuen Aufgabe erfolgt.

8. Verfahren nach einem der vorangehenden Ansprüche,
**dadurch gekennzeichnet,**
**dass** unterbrochene Aufgaben in einer aktualisierten Rangfolge des Ablaufplans neu eingestellt werden, wobei Zwischenergebnisse und/oder Prozessstatus für die spätere Bearbeitung gespeichert werden.

9. Verfahren nach einem der vorangehenden Ansprüche,
**dadurch gekennzeichnet,**
**dass** zur vorrangigen Ausführung von Aufgaben mit höherem Prioritätslevel Aufgaben mit niedrigerem Prioritätslevel verringerte Systemkapazitäten wie Sensoren, Speicher, Prozessorzeit zur Verfügung gestellt werden.

## Claims

1. Method for dynamically influencing process sequences in vehicle system devices, wherein the tasks to be processed by the system are classified according to various criteria and priority levels corresponding to the tasks are assigned and a flowchart is created or updated using the ranking which is determined in this way for the tasks which are to be processed, wherein, in order to carry out prioritized execution of tasks with a relatively high priority level, for example the sensing of a pedestrian in danger as a new task, tasks which are being currently processed with a relatively low priority level are interrupted, **characterized in that** intermediate results of interrupted tasks are accepted as a final result when predefined quality features are achieved, and these interrupted tasks are not incorporated into an updated flowchart.

2. Method according to Claim 1, **characterized in that** the importance of a task which is to be processed is categorized, in particular with respect to safety requirements, as a criterion, and is used predominantly for the purpose of classification.

3. Method according to Claim 1 or 2, **characterized in that** the expiry date of a task which is to be processed is used as a criterion for the purpose of classification.

4. Method according to Claim 1, 2 or 3, **characterized in that** the anticipated processing time of a task which is to be processed is used as a criterion for the purpose of classification.

5. Method according to one of the preceding claims, **characterized in that** the resource requirements such as sensor data acquisition means, use of memory devices, processor utilization factor for a task to be processed in terms of existing system capacity are used for the purpose of classification.

6. Method according to one of the preceding claims, **characterized in that** a dynamic update of the flowchart takes place cyclically.

7. Method according to one of the preceding Claims 1 to 5, **characterized in that** a dynamic update of the flowchart takes place when a new task is input.

8. Method according to one of the preceding claims, **characterized in that** interrupted tasks are re-set in an updated ranking of the flowchart, wherein intermediate results and/or the process status are stored for the later processing operations.

9. Method according to one of the preceding claims, **characterized in that**, for the purpose of prioritized execution of tasks with a relatively high priority level, reduced system capacities, such as sensors, memories, processor time, are made available to tasks with a relatively low priority level.

## Revendications

1. Procédé d'influence dynamique du déroulement des processus dans des dispositifs du système d'un véhicule, les tâches à traiter par le système étant classifiées d'après différents critères et des niveaux de priorité correspondants étant attribués aux tâches et un plan de déroulement étant établi ou actualisé par le biais de l'ordre ainsi déterminé des tâches à traiter, les tâches qui sont actuellement en cours de traitement et ayant un niveau de priorité plus faible étant interrompues pour l'exécution prioritaire des tâches ayant un niveau de priorité plus élevé, par exemple comme nouvelle tâche la détection d'un piéton mis en danger, **caractérisé en ce que** les résultats intermédiaires des tâches interrompues sont acceptés en tant que résultat final si des caractéristiques de qualité prédéfinies sont atteintes et ces tâches interrompues ne sont pas incluses dans un plan de déroulement actualisé.

2. Procédé selon la revendication 1, **caractérisé en ce que** le critère utilisé en priorité pour la classification est le niveau d'importance d'une tâche à traiter, notamment du point de vue des contraintes de sécurité.

3. Procédé selon la revendication 1 ou 2,
**caractérisé en ce que** le critère utilisé pour la classification est le temps d'expiration d'une tâche à traiter.

4. Procédé selon la revendication 1, 2 ou 3, **caractérisé en ce que** le critère utilisé pour la classification est le temps de traitement attendu d'une tâche à traiter.

5. Procédé selon l'une des revendications précédentes, **caractérisé en ce que** le besoin en ressources, par exemple l'acquisition des données des capteurs, l'utilisation de la mémoire, la charge du processeur d'une tâche à traiter en considération de la capacité du système disponible est utilisé pour la classification.

6. Procédé selon l'une des revendications précédentes, **caractérisé en ce qu'**une actualisation dynamique du plan de déroulement a lieu de manière cyclique.

7. Procédé selon l'une des revendications précédentes 1 à 5, **caractérisé en ce qu'**une actualisation dynamique du plan de déroulement a lieu lorsqu'une nouvelle tâche est incluse.

8. Procédé selon l'une des revendications précédentes, **caractérisé en ce que** les tâches interrompues sont reprises dans un ordre actualisé du plan de déroulement, les résultats intermédiaires et/ou l'état du processus étant mémorisés pour le traitement ultérieur.

9. Procédé selon l'une des revendications précédentes, **caractérisé en ce que** pour l'exécution prioritaire des tâches ayant un niveau de priorité plus élevé, des capacités réduites du système, par exemple capteurs, mémoire, temps de processeur, sont mises à la disposition des tâches ayant un niveau de priorité plus faible.
